# EUROPÄISCHE PATENTSCHRIFT

(11) **EP 0 923 163 B1**
(45) Veröffentlichungstag und Bekanntmachung des Hinweises auf die Patenterteilung: **10.12.2008**
(21) Anmeldenummer: 98121652.6
(22) Anmeldetag: 12.11.1998
(51) Int. Cl.: H01R 9/26

(54) **Bussystem-Anordnung, insbesondere für Messgeräte**
Bus system arrangement, in particular for measuring apparatuses
Agencement de système de bus, notamment pour appareils de mesure

(30) Priorität: 13.12.1997 DE 29722065 U
(43) Veröffentlichungstag der Anmeldung: 16.06.1999
(73) Patentinhaber: Weidmüller Interface GmbH & Co., 32760 Detmold (DE)
(72) Erfinder: Hohmann, Eduard, 33106 Paderborn (DE); Frikkee, Arian, 32760 Detmold (DE)
(74) Vertreter: Stracke, Alexander

(56) Entgegenhaltungen:
- EP-A- 0 656 696
- EP-A- 0 666 631
- DE-A- 3 931 539
- DE-U- 29 517 005
- PATENT ABSTRACTS OF JAPAN Bd. 1997, Nr. 07, 31. Juli 1997 (1997-07-31) & JP 9 065441 A (HITACHI LTD), 7. März 1997 (1997-03-07)

## Beschreibung

Die Erfindung betrifft eine Bussystem-Anordnung nach dem Oberbegriff des Anspruchs 1, industriellen Meßgeräten werden die unterschiedlichsten physikalischen Größen gemessen. Derartige Meßgeräte haben im allgemeinen mindestens einen physikalischelektrischen Wandler als Sensorelement für eine zu messende physikalische Größe sowie eine Auswerte-Elektronik, die ein der gemessenen Größe proportionales Signal erzeugt. Zur Verbindung mehrerer derartiger Meßgeräte untereinander und/oder mit einer Zentraleinheit dienen üblicherweise Bussysteme der verschiedensten Ausgestaltung, die nicht nur speziell bei derartigen Meßgeräten, sondern auch bei anderen elektrisch/elektronischen Feldgeräten zum Einsatz kommen.

Es ist eine Bussystem-Anordnung handelsüblich geworden, die aus einer Mehrzahl jeweils mit mindestens einem Geräteabzweig versehenen Busverteilern besteht, die jeweils zuführende und abführende Kabeldurchführungen haben und durch Buskabelabschnitte mit mindestens zwei Leitern untereinander verbunden sind.

In den bekanntgewordenen Busverteilern befinden sich jeweils auf einer Leiterplatte Klemmen zum Anschließen der ankommenden und der abgehenden Buskabelabschnitte sowie Anschlüsse für die zum Feldgerät führenden Leiter. Es besteht bei derartigen Bussystem-Anordnungen das Erfordernis, durch Widerstand-Kondensator-Glieder sicherzustellen, daß zwischen den die Speise-Energie und Steuersignale oder Meßsignale leitenden Leitern der Buskabelabschnitte bestimmungsgemäße Belastungsverhältnisse herrschen, um Störspannungen, Störimpulse oder dergleichen, die die Kommunikationsleistung des Bussystems beeinträchtigen, zu vermeiden. Der Kondensator blockiert die Gleichspannung des Systems, damit der nachgeschaltete Widerstand nicht zu stark erhitzt wird. Bei der bekannten, gattungsgemäßen Bussystem-Anordnung ist zu diesem Zweck jeder Busverteiler auf seiner Leiterplatte mit einer entsprechenden, betätigbaren Widerstand-Kondensator-Schaltung versehen. Vorrangig wird ein derartiges Widerstand-Kondensator-Glied am Ende einer derartigen Bussystem-Anordnung benötigt, doch besteht aus Gründen einer sinnvollen und preiswerten Serienfertigung das Erfordernis, derartige Busverteiler völlig baugleich auszugestalten und es besteht bislang auch die Vorstellung, daß es sinnvoll sein kann, in dem einen oder anderen Anwendungsfall auch während des Verlaufes der Bussystem-Anordnung ein Widerstand-Kondensator-Glied aktivieren zu können.

Bei einer derartigen Ausgestaltung hat der installierende Anwender die Möglichkeit, relativ viele derartige Widerstand-Kondensator-Glieder zu aktivieren, gerade auch bei der Unübersichtlichkeit relativ langer derartiger Anordnungen. Dies kann dazu führen, daß anwenderseitig eine erhebliche Energiespeicherung installiert wird, und zwar so erheblich, daß bei entsprechenden Kondensatorentladungen ein zündfähiger Funke entsteht. Die vorbekannte Bussystem-Anordnung ist von daher für den Einsatz in explosionsgefährdeten Bereichen wenig geeignet.

Die Problematik des Einsatzes von Bussystem-Anordnungen in Gefahrumgebungen wird in dem Artikel "Fieldbus in hazardous areas"; Lindner and all; 8131 Advances in Instrumentation and Control-1991-Research Triangle Park, NC, US, Seiten 1799-1813 beschrieben.

Der vorliegenden Erfindung liegt von daher die Aufgabe zugrunde, eine derartige Bussystem-Anordnung dahingehend weiter zu entwickeln, daß sie unter Beibehaltung ihrer Vorteile auch in explosionsgefährdeten Bereichen einschließlich der Zündschutzart Eigensicherheit eingesetzt werden kann.

Die erfindungsgemäße Lösung ergibt sich aus den Merkmalen des Anspruches 1. Alle Busverteiler der Bussystem-Anordnung sind in vorteilhafter Weise untereinander baugleich. Die für das System erforderliche Energiespeicherung durch das Widerstand-Kondensator-Glied kann aber ausschließlich an vorgegebener Stelle nur noch am letzten Busverteiler über seine noch freie abzuführende Kabeldurchführung geschehen. Das separate Widerstand-Kondensator-Glied kann auf die Belastungs- und Energiespeichererfordernisse des Systems unter Berücksichtigung der Explosionsschutzerfordernisse abgestimmt werden. Es läßt sich auf diese Weise problemlos und insbesondere ohne die Problematik einer möglichen Fehlinstallation im Verlauf der Bussystem-Anordnung auch die Zündschutzart Eigensicherheit erreichen, die auf der Tatsache beruht, daß zur Zündung einer explosionsfähigen Atmosphäre eine bestimmte Mindestzündenergie erforderlich ist. Durch das separate Widerstand-Kondensator-Glied kann erreicht werden, daß der dann eigensichere Stromkreis nicht in der Lage ist, bei einer Kondensatorentladung eine solche Zündenergie zu liefern, wobei durch entsprechende Auslegung dieses separaten Gliedes auch eine Erfassung der verschiedenen Explosionsgruppen möglich ist, da die Mindestzündenergie einer explosionsfähigen Atmosphäre durch einen elektrischen Funken insoweit auch stark stoffabhängig ist.

Weitere bevorzugte Ausgestaltungen der erfindungsgemäßen Bussystem-Anordnung sind in Unteransprüchen gekennzeichnet. Sie betreffen insbesondere zweckmäßige bauliche Ausgestaltungen des separaten Widerstand-Kondensator-Gliedes sowie zweckmäßige Ausgestaltungen seines Anschlusses an die Kabeldurchführung des letzten Busverteilers der Bussystem-Anordnung. Ein Ausführungsbeispiel des Erfindungsgegenstandes wird nachstehend unter Bezugnahme auf die Zeichnung näher beschrieben.

Es zeigen:
- Figur 1: eine Bussystem-Anordnung gemäß der Erfindung in teilweise schematisierter Teilansicht mit einer Einzelheit der Verbindung zwischen dem Busverteiler und dem Widerstand-Kondensator-Glied,
- Figur 2: das Schaltbild des letzten Busverteilers mit angeschlossenem Widerstand-Kondensator-Glied der Anordnung nach Figur 1.

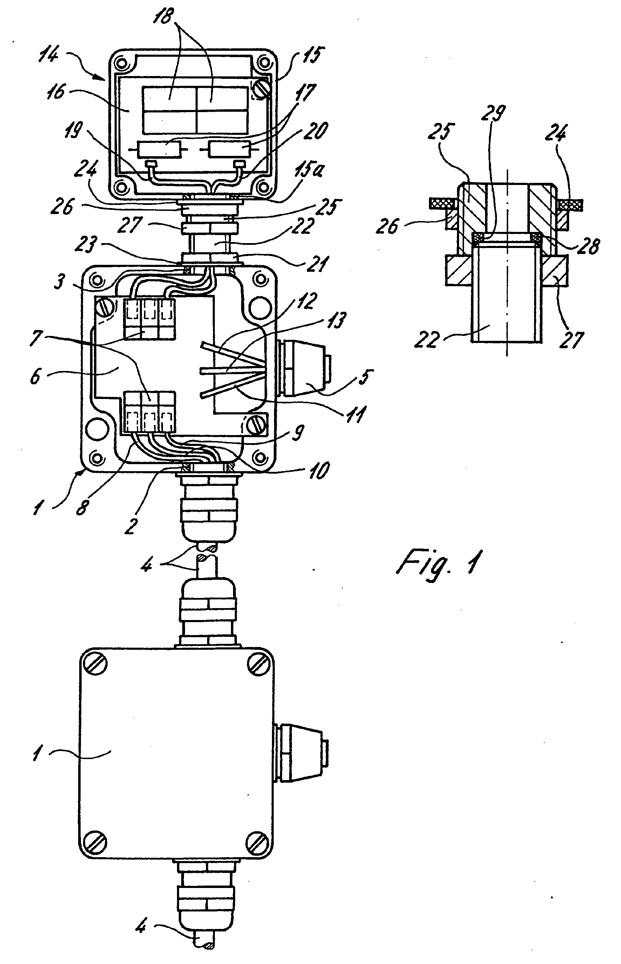

Die Bussystem-Anordnung gemäß der Erfindung besteht aus einer Mehrzahl von Busverteilern 2, die jeweils zuführende Kabeldurchführungen 1 sowie abführende Kabeldurchführungen 3 haben, mit deren Hilfe sie innerhalb der Bussystem-Anordnung durch Buskabelabschnitte 4, die zwei und mehr Busleiter beinhalten, elektrisch miteinander verbunden sind. In Figur 1 ist insoweit nur das Ende einer derartigen Bussystem-Anordnung mit dem vorletzten und dem letzten Busverteiler 1 gezeigt.

Jeder der Busverteiler 1 hat im dargestellten Ausführungsbeispiel eine Abzweigung 5, an die mechanisch beispielsweise mittels eines nicht dargestellten Adapters ein nicht dargestelltes Feldgerät insbesondere in Form eines Meßgerätes angeschlossen werden kann. Für die elektrische Verknüpfung ist in jedem der Busverteiler 1 eine Leiterplatte 6 angeordnet. Sowohl die Eingangsseite wie die Abgangsseite der Leiterplatte 6 sind mit Anschlußklemmen 7 bestückt. Im dargestellten Ausführungsbeispiel von Buskabelabschnitten 4 mit jeweils zwei Busleitern 8 und 9 sowie einem Schirmleiter 10 ist der letzte Busverteiler 1 der Anordnung mit dem vorletzten eingangsseitig über die Busleiter 8 und 9 sowie über den Schirmleiter 10 verknüpft. Mit der Leiterplatte 6 sind ferner zum Feldgerät, insbesondere zu einem Meßgerät führende Verbindungsleiter 11, 12 sowie ein Schirmleiter 13 elektrisch verbunden.

Es ist nun für eine solche Bussystem-Anordnung ein separates Widerstand-Kondensator-Glied 14 vorgesehen, das über die noch freie abführende Kabeldurchführung 3 des letzten Busverteilers 1 an diesen abgeschlossen wird und der funktionsgerechten, bestimmungsgemäßen Belastung zwischen den Busleitern der Bussystem-Anordnung in ihrer Gesamtheit dient. Die Busverteiler 1 der Anordnung selbst sind ohne eine vergleichbare Widerstand-Kondensator-Schaltung belassen und untereinander baugleich.

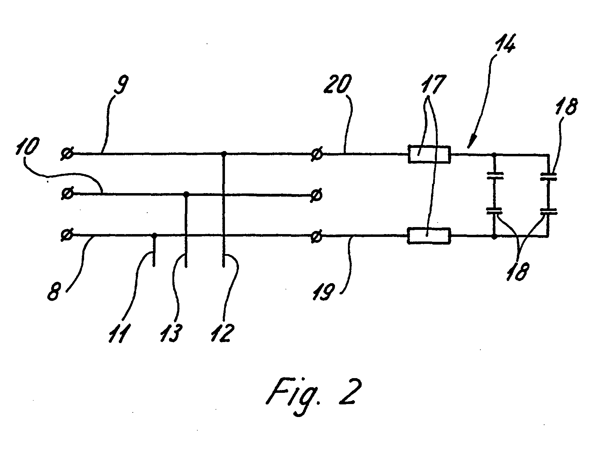

Im dargestellten Ausführungsbeispiel sind in dem Gehäuse 15 des Widerstand-Kondensator-Gliedes 14 auf einer Leiterplatte 16 zwei Widerstände 17 und dafür insgesamt vier Kondensatoren 18 entsprechend dem Schaltbild in Figur 2 in Reihe und parallel geschaltet, so daß gewährleistet ist, daß auch im Falle des Ausfalles des einen oder anderen Kondensators eine Erwärmung der Widerstände 17 verhindert wird.

Dieses separate Widerstand-Kondenstor-Glied 14 kann so ausgelegt werden, daß es jeweils nach den Erfordernissen der zu installierenden Anordnung einerseits eine solche Speicherenergie gewährleistet, daß das Kommunikationssystem ordnungsgemäß arbeitet, andererseits, auch in Anpassung an die verschiedenen Explosionsgruppen in jedem Fall nur eine so geringe Speicherenergie beinhaltet, daß im Sinne der Zündschutzart Eigensicherheit die jeweilige Mindestzündenergie im Fall einer Kondensatorentladung nicht überschritten wird.

Elektrisch wird das Widerstand-Kondensator-Glied 14 über zwei fest mit der Leiterplatte 16 verankerte Leiter 19 und 20 durch die abführende Kabeldurchführung 3 des letzten Busverteilers 1 hindurch mit zwei Anschlußklemmen 7 der Leiterplatte 6 des Busverteilers 1 verdrahtet. Zur Gewährleistung der Unlösbarkeit der Verdrahtung der Leiter 19, 20 mit der Leiterplatte 16 des Widerstand-Kondensator-Gliedes 14 kann zusätzlich zur üblichen Anschlußtechnik eine ergänzende Verklebung oder dergleichen vorgesehen sein.

Im dargestellten Ausführungsbeispiel ist eine freitragende mechanische Verbindung zwischen dem letzten Busverteiler 1 und seiner abführenden Kabeldurchführung 3 mit dem Gehäuse 15 des Widerstand-Kondensator-Gliedes 14 vorgesehen. Die Verbindung ist so gestaltet, daß einerseits die mechanische Verbindung gewährleistet ist, ferner eine vollständige Abdichtung sichergestellt wird und außerdem ein Ausrichten der üblicherweise metallischen Gehäuse des Busverteilers und des Widerstand-Kondensator-Gliedes 14 zueinander gewährleistet ist. Es wird ferner zweckmäßig dafür Sorge getragen, daß die ausgangsseitig am letzten Busverteiler 1 vorhandene Verschraubung nicht ausgetauscht werden muß. Im dargestellten Ausführungsbeispiel besteht Letztere aus einem hohen mit einer festen Mutter 21 ausgerüsteten Gewindestutzen 22, der mit einem Außengewinde in die mit Innengewinde versehene abführende Kabeldurchführung 3 des Busverteilers 1 unter Zwischenfügung einer Dichtung 23 fest eingeschraubt ist. In eine mit Innengewinde versehene Kabeldurchführungsöffnung 15a im Gehäuse 15 des Widerstand-Kondensator-Gliedes 14 kann mit Hilfe einer Dichtung 24 ein hohles Gewindestück 25 mit Hilfe einer festen Mutter 26 eingeschraubt werden. In das Gewindestück 25 kann das freie Ende des Gewindestutzens 22 gegen eine im Inneren des Gewindestückes 25 vorgesehene, mit einer Dichtung 28 versehene Schulter 29 geschraubt werden. Eine auf dem Außengewinde des Gewindestutzens 22 angeordnete drehbare Mutter 27 kann dann durch Konterung gegen das freie Außenende des Gewindestückes 25 eine mechanisch stabile, abgedichtete Festsetzung der betroffenen Gehäuse aneinander hervorrufen, und zwar jeweils in der gewünschten relativen Positionslage zueinander.

Abweichend vom dargestellten Ausführungsbeispiel ist es auch möglich, das Widerstand-Kondensator-Glied 14 räumlich in etwas größerer Entfernung vom letzten Busverteiler 1 der Bussystem-Anordnung zu installieren. Es ist dann für eine dichte und zuverlässige Durchführung der dann etwas längeren Verbindungsleiter 19, 20 durch die Kabeldurchführungen des Busverteilers und des Gehäuses 15 Sorge zu tragen.

## Patentansprüche

1. Bussystem-Anordnung für den Einsatz in explosionsgefährdeten Bereichen, einschließlich der Zündschutzart Eigensicherheit , insbesondere für Meßgeräte, mit einer Mehrzahl von jeweils mindestens einen Geräteabzweig aufweisenden Busverteilern (1), die jeweils zuführende (2) und abführende (3) Kabeldurchführungen haben und durch Buskabelabschnitte (4) mit mindestens zwei Busleitem untereinander verbunden sind, und jeweils mit einer Widerstand-Kondensator-Schaltung versehen sind, **dadurch gekennzeichnet, dass** ausschließlich der letzte Busverteiler (1) der Bussystem-Anordnung über seine abführende Kabeldurchführung (3) mit einem separaten Widerstand-Kondensator-Glied (14) verbunden ist.

2. Bussystem-Anordnung nach Anspruch 1, **dadurch gekennzeichnet, daß** das Widerstand-Kondensator-Glied (14) parallel und in Reihe geschaltet zwei Widerstände (17) und vier Kondensatoren (18) beinhaltet.

3. Bussystem-Anordnung nach einem der vorhergehenden Ansprüche, **dadurch gekennzeichnet, daß** das Widerstand-Kondensator-Glied (14) ein Gehäuse (15) hat, in dem eine Leiterplatte (16) befestigt ist, auf der die Widerstände (17) und die Kondensatoren (18) angeordnet sind und auf der zur elektrischen Verbindung mit dem Busverteiler (1) zwei Leiter (19, 20) befestigt sind.

4. Bussystem-Anordnung nach Anspruch 3, **dadurch gekennzeichnet, daß** die beiden Leiter (19, 20) unverlierbar auf der Leiterplatte (16) befestigt sind.

5. Bussystem-Anordnung nach einem der vorhergehenden Ansprüche, **dadurch gekennzeichnet, daß** der Busverteiler (1) und das Widerstand-Kondensator-Glied (14) mechanisch fest, nach außen abgedichtet und bezüglich der Lage der beiden Gehäuse zueinander positionierbar aneinander befestigt sind.

6. Bussystem-Anordnung nach Anspruch 5, **dadurch gekennzeichnet, daß** die abführungsseitig am Gehäuse des Busverteilers (1) vorhandene Verschraubung, bestehend aus einem hohlen Gewindestutzen (22), der über eine Dichtung (23) mit einer festen Mutter (21) in das Innengewinde der abführenden Kabeldurchführung (3) geschraubt ist, mit seinem freien Ende abgedichtet in ein hohles Gewindestück (25) eingeschraubt ist, das mit einer festen Mutter (26) gegen eine Dichtung (24) in die mit Innengewinde versehene Kabeldurchführung (15a) des Gehäuses (15) des Widerstand-Kondensator-Gliedes (14) geschraubt ist, wobei die Anordnung durch eine auf dem Gewindestutzen (22) angeordnete drehbare Kontermutter (27) gegen das freie Ende des Gewindestückes (25) festgespannt ist.

## Claims

1. Bus system arrangement for use in explosion-hazardous areas, including the intrinsically safe ignition protection rating, in particular for measuring instruments, with a plurality of bus distributors (1), each of which comprises at least one instrument branch and each of which comprises incoming (2) and outgoing (3) cable glands and which are interconnected by bus cable sections (4) with at least two bus conductors and each of which is provided with a resistor-capacitor circuit, **characterised in that** only the last bus distributor (1) of the bus system arrangement is connected to a separate resistor-capacitor element (14) via its outgoing cable gland (3).

2. Bus system arrangement according to claim 1, **characterised in that** the resistor-capacitor element (14) comprises two parallel- and series-connected resistors (17) and four capacitors (18).

3. Bus system arrangement according to any of the preceding claims, **characterised in that** the resistor-capacitor element (14) has a housing (15), wherein a printed circuit board is mounted on which the resistors (17) and capacitors (18) are located and to which two conductors (19, 20) for electrical connection to the bus distributor (1) are secured.

4. Bus system arrangement according to claim 3, **characterised in that** the two conductors (19, 20) are captively secured to the printed circuit board.

5. Bus system arrangement according to any of the preceding claims, **characterised in that** the bus distributor (1) and the resistor-capacitor element (14) are mechanically fixed, sealed against the outside and secured to one another while being capable of changing the position of the two housings relative to one another.

6. Bus system arrangement according to claim 5, **characterised in that** the free end of the screw joint located on the outgoing side on the housing of the bus distributor (1), comprising a hollow threaded section (22) tightened into the female thread of the outgoing cable gland (3) by means of a seal (23) with a fixed nut (21), is, while forming a seal, tightened into a hollow threaded piece (25), which is with a fixed nut (26) tightened against a seal (24) into the female-threaded cable gland (15a) of the housing (15) of the resistor-capacitor element (14), the arrangement being clamped against the free end of the threaded piece (25) by means of a rotatable locknut (27) located on the threaded section (22).

## Revendications

1. Agencement de système de bus pour l'utilisation dans des zones à risques d'explosion, y compris le mode de protection sécurité intrinsèque, en particulier pour des appareils de mesure, avec une pluralité de répartiteurs de bus (1) présentant respectivement au moins une dérivation d'appareil qui possèdent des passages de câbles respectivement d'alimentation (2) et d'évacuation (3) et sont reliés entre eux par des sections de câbles de bus (4) avec au moins deux conducteurs de bus, et sont pourvus respectivement d'un circuit à résistance et condensateur, **caractérisé en ce qu'**exclusivement le dernier répartiteur de bus (1) de l'agencement de système de bus est relié par son passage de câble d'évacuation (3) à un organe à résistance et condensateur (14) séparé.

2. Agencement de système de bus selon la revendication 1, **caractérisé en ce que** l'organe à résistance et condensateur (14) monté en parallèle et en série contient deux résistances (17) et quatre condensateurs (18).

3. Agencement de système de bus selon l'une quelconque des revendications précédentes, **caractérisé en ce que** l'organe à résistance et condensateur (14) possède un boîtier (15), dans lequel est fixée une carte de circuits imprimés (16), sur laquelle les résistances (17) et les condensateurs (18) sont disposés et sur laquelle deux conducteurs (19, 20) sont fixés pour la liaison électrique au répartiteur de bus (1).

4. Agencement de système de bus selon la revendication 3, **caractérisé en ce que** les deux conducteurs (19, 20) sont fixés de manière imperdable sur la carte de circuits imprimés (16).

5. Agencement de système de bus selon l'une quelconque des revendications précédentes, **caractérisé en ce que** le répartiteur de bus (1) et l'organe à résistance et condensateur (14) sont fixés l'un sur l'autre solidement mécaniquement, de manière étanche par rapport à l'extérieur et de manière positionnable l'un par rapport à l'autre par rapport à la position des deux boîtiers.

6. Agencement de système de bus selon la revendication 5, **caractérisé en ce que** le vissage présent côté évacuation sur le boîtier du répartiteur de bus (1) se composant d'un embout fileté (22) creux qui est vissé par le biais d'une garniture (23) avec un écrou (21) fixe dans le filetage intérieur du passage de câble (3) d'évacuation, est vissé avec son extrémité libre de manière étanche dans une pièce filetée (25) creuse qui est vissée avec un écrou (26) fixe contre une garniture (24) dans le passage de câble (15a) pourvu d'un filetage intérieur du boîtier (15) de l'organe à résistance et condensateur (14), l'agencement étant bloqué par serrage par un contre-écrou (27) rotatif disposé sur l'embout fileté (22) contre l'extrémité libre de la pièce filetée (25).
